# EUROPÄISCHE PATENTSCHRIFT

(11) **EP 3 091 259 B1**
(45) Veröffentlichungstag und Bekanntmachung des Hinweises auf die Patenterteilung: **20.12.2017**
(21) Anmeldenummer: 16167731.5
(22) Anmeldetag: 29.04.2016
(51) Int. Cl.: F16K 31/126

(54) **FELDGERÄT ZUM REGELN EINES PROZESSFLUIDSTROMS**
FIELD DEVICE FOR REGULATING A PROCESS FLUID FLOW
APPAREIL DE TERRAIN DESTINE A REGULER LE FLUX DE FLUIDE DE PROCESSUS

(30) Priorität: 07.05.2015 DE 102015005832
(43) Veröffentlichungstag der Anmeldung: 09.11.2016
(73) Patentinhaber: Samson Aktiengesellschaft, 60314 Frankfurt (DE)
(72) Erfinder: Kiesbauer, Jörg, 64859 Eppertshausen (DE)
(74) Vertreter: Schmid, Nils T.F.

(56) Entgegenhaltungen:
- WO-A1-2010/097734
- DE-A1-102008 058 208
- DE-A1-102010 037 898
- US-B1- 6 415 815

## Beschreibung

Die Erfindung betrifft ein Feldgerät zum Regeln eines insbesondere großvolumigen Prozessfluidstroms in einer prozesstechnischen Anlage, wie eine Raffinerie, eine Lebensmittelanlage, wie eine Brauerei, oder eine petrochemische Anlage, oder dergleichen.

Zum Leiten und Regeln im Besonderen von großvolumigen Prozessfluidströmen in einer prozesstechnischen Anlage kommen Ventile mit großem Durchflussquerschnitt, insbesondere mit einer Anschlussnennweite von wenigstens DN 100, vorzugsweise wenigstens DN 200, zum Einsatz. Ventile dieser Größenordnung erfordern hohe Stellkräfte und eine hohe Antriebsleistung, um eine Regelposition einzunehmen oder zu halten oder in eine Sicherheitsstellung zu verfahren. Um die hohen Stellkräfte bereitzustellen, ist es bekannt, pneumatische Antriebe einzusetzen, die von einem pneumatischen Stellungsregler gesteuert sind. Pneumatische Antriebe sind an eine insbesondere konstante Luftdruckquelle angeschlossen, die über den pneumatischen Stellungsregler anhand von einer Sollpositionsregelung mit einem pneumatischen Stellsignal beaufschlagt werden kann, um das Stellventil zum Einstellen der Prozessfluidströmung verlagern zu können. Ein pneumatischer Antrieb hat den Vorteil eines fehlenden oder geringen elektrischen Energiebedarfs, so dass eine Explosionsgefahrdung in der Umgebung des Stellungsreglers deutlich reduziert ist, allerdings verursacht die pneumatische Verschaltung relativ hohe Montage- und Betriebskosten.

Um den Antriebsenergiebedarf zum Stellen eines großen Ventils zu reduzieren, kann ein Teil des Prozessfluidstroms abgezweigt und als Antriebsfluid zum Stellen des Großventils eingesetzt werden. Eine Anordnung der zuvor beschriebenen Art, bei der ein Antrieb eines Hauptventils durch Prozessfluid gespeist ist, ist aus DE 10 2010 037 898 A1 bekannt. Bei der bekannten Anordnung ist ein Hauptventil vorgesehen, das einen Zulauf, einen Ablauf und einen zwischen Zu- und Ablauf angeordneten Ventildurchgang aufweist, der durch ein bewegliches Ventilglied des Hauptventils verschließbar. Das Ventilglied weist außerdem einen Durchlass in eine Ausgleichs- oder Arbeitskammer auf, der eine Fluidkommunikation zwischen dem Zulauf und der Arbeitskammer ermöglicht. Die Arbeitskammer ist über eine Leitung mit dem Ablauf des Hauptventils verbunden. In der Arbeitskammer ist weiterhin eine Feder angeordnet, die das Ventilglied in Richtung des Ventildurchgangs vorspannt. Zwischen der Arbeitskammer und dem Ablauf ist ein Hilfsstellgerät mit einem Hilfsventil und einem elektrischen Antrieb zum Stellen des Hilfsventils vorgesehen. Durch Schließen des Hilfsventils kann in der Arbeitskammer ein Druck derart aufgebaut werden, dass die Fluidkräfte und die Federvorspannung das Hauptventilglied in einer geschlossenen Stellung halten. Wird das Hilfsventil geöffnet, kann Prozessfluid aus der Arbeitskammer in Richtung des Ablaufs entweichen und der Arbeitskammerdruck sinkt. Sobald die Federkräfte durch den auf das Ventilglied wirkenden Prozessfluiddruck im Zulauf überwunden werden, bewegt sich das Hauptventilglied aus dem Ventildurchgang und öffnet das Hauptventil.

Das bekannte Feldgerät hat jedoch den Nachteil, dass im Hilfsstellgerät das Prozessfluid in unmittelbarer Nähe zur elektrischen Antriebsenergie des Hilfsstellantriebs geführt werden muss. Aufgrund der leichten Entzündbarkeit bestimmter Prozessfluide ist ein relativ hoher konstruktiver Aufwand erforderlich, um bei derartigen Stellgeräten Explosionsschutzstandards einzuhalten. Überdies verursacht die bekannte Anordnung hohe Kosten bei der Feldgerätinstallation, da die elektrische Antriebsenergie innerhalb der prozesstechnischen Anlage möglicherweise über mehrere hundert Meter Leitungsweg explosionssicher zum Feldgeräteeinsatz geleitet werden muss.

Auch Dokument WO2010/097734 offenbart eine Anordnung bei der ein Antrieb eines Haupventils durch Prozessfluid gespeist wird. Es ist Aufgabe der Erfindung, die Nachteile des Standes der Technik zu überwinden und insbesondere ein konstruktiv einfaches Feldgerät bereitzustellen, das unter Einhaltung aller Explosionsschutzvorschriften energieeffizient arbeitet und geringe Installationskosten verursacht.

Diese Aufgabe wird durch die Merkmale des Gegenstands gemäß Anspruch 1 gelöst.

Danach umfasst ein Feldgerät zum Regeln eines Prozessfluidstroms einer prozesstechnischen Anlage, ein Hauptventil zum Einstellen des Prozessfluidstroms, das einen mit einem Ventilglied verschließbaren Ventildurchgang, einen Zulauf stromaufwärts des Ventildurchgangs und einen Ablauf stromabwärts des Ventildurchgangs aufweist, sowie einen prozessfluidgespeisten Hauptantrieb zum Stellen des Hauptventils, der wenigstens eine mit Prozessfluid zu beaufschlagende Arbeitskammer und eine Rückstelleinrichtung, wie eine insbesondere mit dem Prozessfluid oder einem anderen Fluid zu beaufschlagende Rückstellkammer und/oder einen Federspeicher, insbesondere zum Vorspannen des Ventilglieds aufweist. Vorzugsweise ist die Arbeitskammer zumindest teilweise durch eine bewegliche Antriebswirkfläche, wie eine Membran oder eine Kolbenseite, begrenzt, gegen die das Prozessfluid wirkt, um die Hauptantriebskraft des Hauptantriebs zu erzeugen oder zumindest beispielsweise gegen eine Federkraft einer vorgespannten Druckfeder direkt zu beeinflussen. Insbesondere greift der Federspeicher auf die bewegliche Antriebswirkfläche zu. Das Feldgerät umfasst außerdem eine Bypassleitung zum Speisen der Arbeitskammer mit Prozessfluid. Die Bypassleitung verbindet den Ablauf und den Zulauf fluidisch. Vorzugsweise hat das Hauptventil ein Ventilgehäuse, das innen den Ventildurchgang und/oder den Ventilsitz festlegt, wobei in dem den Zulauf bzw. den Ablauf begrenzenden Gehäuseteil eine Öffnung eingebracht ist, in der die Bypassleitung zum Erstellen der fluidischen Drücke zwischen Zulauf und Ablauf anschließbar oder angeschlossen ist. Zudem hat das Feldgerät ein in der Bypassleitung angeordnetes Hilfsventil zum Verändern des Prozessfluiddrucks in der Arbeitskammer. Hinzu kann das Hilfsventil derart in der Bypassleitung angeordnet sein, dass der Durchströmungsquerschnitt an der Stelle des Hilfsventils verändert, insbesondere geschlossen und/oder vollständig geöffnet, werden kann. Dabei ist das Hilfsventil derart ausgeführt, dass es kontinuierlich stufenfrei zwischen der geschlossenen und der geöffneten Position gestellt werden kann.

Erfindungsgemäß ist das Feldgerät zum insbesondere kontinuierlichen Stellen des Hilfsventils und vorzugsweise zum kontinuierlichen Einstellen des Prozessfluiddrucks in der Arbeitskammer des Hauptantriebs mit einem pneumatischen Antrieb oder Hilfsantrieb versehen, der strukturell zum Betätigen des Hilfsventils ausgeführt ist. Der pneumatische Antrieb hat eine pneumatische Druckquelle, die den pneumatischen Antrieb mit pneumatischer Druckenergie speist. Zudem umfasst das erfindungsgemäße Feldgerät einen pneumatischen Stellungsregler, der in Abhängigkeit von der Stellung des Hauptventils ein pneumatisches Steuer- oder Regelsignal erzeugt und dem pneumatischen Antrieb zuführt. Der pneumatische Antrieb oder Hilfsantrieb ist an dem Hilfsantriebsgehäuse baulich angedockt.

Mit der erfindungsgemäßen Maßnahme wird eine deutliche Verbesserung des Regelungsprozesses des Prozessfluidstroms erreicht, obgleich für die Hilfsventilsteuerung und/oder -regelung an dem pneumatisch betriebenen Hilfsventil die betriebsgemäße Stellung des Hauptventils als Regelungsgröße herangezogen wird. Über die Kenntnis der Position des Hauptventils wird insbesondere anhand der Information weiterer Betriebsdaten, wie Druck oder Temperatur, insbesondere des Prozessfluidstroms die Stellungsregelung des Hilfsventils durchgeführt.

Die Erfindung kann auch ein Verfahren zum Regeln des Prozessfluidstroms insbesondere gemäß Anspruch 11 betreffen. Danach ist ein Verfahren zum Regeln des Prozessfluidstroms der prozesstechnischen Anlage mit Hilfe eines Feldgeräts nach einem der Ansprüche 1 bis 10 vorgesehen, bei dem ein Hauptventil von einem prozessfluidgespeisten Hauptantrieb gestellt wird, indem dessen Arbeitskammer mit prozessfluid beaufschlagt wird. Ein zusätzlicher pneumatischer Antrieb zum Stellen eines Hilfsventils wird vorgesehen, der die Prozessfluidströmung in die Arbeitskammer einstellt. Die Stellung des durch den pneumatischen Antrieb zu stellenden Hilfsventils wird derart eingestellt, dass dem pneumatischen Antrieb ein pneumatisches Steuersignal zugeführt wird, das in Abhängigkeit von der Stellung des Hauptventils geregelt wird. Es sei klar, dass das erfindungsgemäße Feldgerät dazu ausgelegt sein soll, die Verfahrensschritte des erfindungsgemäßen Verfahrens auszuführen. Es sei auch klar, dass das erfindungsgemäße Regelungsverfahren gemäß den Funktionsschritten des erfindungsgemäßen Feldgeräts verfahren kann.

Im Gegensatz zu den bekannten elektrischen Antrieben von Stellgeräten kann mit der erfindungsgemäßen Vorrichtung eines pneumatischen Antriebs oder Hilfsantriebs auf der Hilfsstellgeräteseite eine Vielzahl von zusätzlichen Einstellungsparametern zur Verfügung gestellt werden, mit denen der Betätigungsdruck innerhalb der Arbeitskammer des Hauptantriebs stufenlos und präzise eingestellt werden kann. Bei den herkömmlichen Gerätsystemen ist eine flexible Einstellung der Hauptantriebskraft wenn überhaupt nur eingeschränkt möglich. Durch die Verwendung eines pneumatischen Antriebs im Stellgerät kann eine elektrische Antriebsenergieversorgung für das Stellgerät entfallen. Dadurch ist eine vereinfachte und kompakte Konstruktion des Stellgeräts möglich, da weder Isolationsabstände noch isolierende oder spezielle abdichtende konstruktive Maßnahmen zwischen prozessfluidführenden Stellgeräteteilen und dem Antrieb des Stellgeräts notwendig sind. Eine kostenaufwendige Verlegung elektrischer Leitungen bei Installation des Stellgeräts entfällt. Durch die Speisung des Hauptantriebs mit Prozessfluid fällt der Pneumatikbedarf zum Stellen des Hauptventils auch bei großvolumigen Prozessfluidströmen sehr gering aus. Bei dem erfindungsgemäßen Antrieb sind somit sowohl Installations- als auch Betriebskosten gegenüber bekannten Antrieben deutlich reduziert.

Das erfindungsgemäße Feldgerät hat zwei Stellgeräte, nämlich ein Hauptstellgerät und ein Neben- oder Hilfsstellgerät. Beide Stellgeräte haben entsprechend zugeordnete und/oder unterschiedlich betriebene Antriebe, wobei die Antriebskraft für den Hauptstellantrieb aufgrund von Druckunterschieden des Prozessfluids zwischen Zulauf und Ablauf realisiert ist, während der Neben- oder Hilfsantrieb gemäß einer Regelungsroutine eines pneumatischen Stellungsreglers ein pneumatisches Antriebssignal empfängt, durch das das Neben- oder Hilfsventil in dessen Sollstellung verfahren werden soll. Die Regelungsroutine für das Nebenstellgerät, insbesondere in dessen Stellungsregler implementiert, benutzt ein von dem Prozessfluid vollkommen getrennten pneumatischen Betriebszyklus, wobei die Stellungsregelung mit Hilfe der Erfassung der Stellung des Hauptventils erreicht wird, welches Stellungssignal dem pneumatischen Stellungsregler des Nebenstellgeräts zugeführt wird.

Insofern sind zwei Stellantriebe, nämlich ein Hauptantrieb und ein Nebenantrieb, vorhanden, wobei der Hauptantrieb mit Prozessmedium befüllt wird, während der Neben- oder Hilfsantrieb mit dem pneumatischen Steuersignal des Stellungsreglers des Nebenstellgeräts beaufschlagt wird.

Bei einer bevorzugten Ausführung verbindet die Bypassleitung den Zulauf mit der Prozessfluidsenke, wie dem Ablauf des Hauptventils, und weist eine zwischen dem Zulauf und der Prozessfluidsenke angeordnete Abzweigung in die Arbeitskammer auf. Das Hilfsventil kann je nach Gestaltung des Hauptventils insbesondere in Abhängigkeit von der eingestellten Wirkung des Federspeichers, in Bezug auf die Abzweigungsstelle dem Zulauf zugewandt oder dem Ablauf zugewandt sein. Ist das Hilfsventil ablaufseitig angeordnet, herrscht in der Arbeitskammer des Hauptventils (insbesondere bei geschlossenem Hilfsventil) der fluidische Strömungsüberdruck am Zulauf. Durch Öffnung des Hilfsventils wird ein Druckausgleich insbesondere je nach Stellung des Hilfsventils teilweise oder vollständig erreicht. Auf diese Weise können die gegen die Arbeitskammer arbeitenden Federspeicher ihre Federkraft abgeben, wodurch das Hauptventil in eine gewünschte Zwangsposition aufgrund der Rückstellkräfte der Rückstelleinrichtung gebracht werden kann. Alternativ kann das Hilfsventil auf der dem Zulauf zugewandten Bypassleitungsseite in Bezug auf die Abzweigung angeordnet sein. In der zulaufseitigen Konfiguration der Anordnung des Hilfsventils wird die Arbeitskammer stets mit dem Druck der Drucksenke am Ablauf beaufschlagt. Bei Öffnung, insbesondere beim allmählichen Öffnen, des Hilfsventils kann die Arbeitskammer mit dem Überdruck des Zulaufs insbesondere kontinuierlich beaufschlagt werden, wodurch die Rückstelleinrichtung, insbesondere die Federkräfte eines Federspeichers, überwunden wird, wodurch durch den Druckaufbau das Ventilglied des Hauptventils in eine gewünschte Stellposition verlagert werden kann.

Wie dargestellt wird das Strömungsgefälle an dem Hauptventil innerhalb der Prozessfluidströmung genutzt, um Antriebskräfte des Hauptantriebs zu generieren.

Bei einer bevorzugten Ausführung der Erfindung ist in der Bypassleitung stromaufwärts der Abzweigung ein Drosselglied, wie eine Festdrossel, zum Begrenzen des Prozessfluiddrucks in der Bypassleitung und/oder stromabwärts der Abzweigung das Hilfsventil des Stellgeräts angeordnet. Bei einer alternativen Ausführung ist das Drosselglied stromabwärts der Abzweigung angeordnet und das Hilfsventil entsprechend stromaufwärts der Abzweigung.

Es sei klar, dass das Drosselglied auch als eine einstellbare Drossel, ein mit dem Stellungsregler des Stellgeräts verbundenes Stellventil oder als ein unabhängig vom Stellgerät, das das Hilfsventil umfasst, arbeitendes zweites Stellgerät ausgeführt sein kann. Mit Hilfe des Drosselglieds lässt sich der durch die Bypassleitung geführte Prozessfluidstrom begrenzen, so dass zu einer Druckänderung der Arbeitskammer des Hauptantriebs lediglich geringe Stellkräfte zur Beeinflussung des gedrosselten Prozessfluidstroms in der Bypassleitung notwendig sind. Eine Anordnung des Hilfsventils stromaufwärts der Abzweigung erlaubt es bei Bedarf dem maximalen Zulaufdruck an die Arbeitskammer des Hauptantriebs abzugeben, um eine dynamische Stellbewegung zu erreichen.

Bei einer bevorzugten Ausführung weist der Stellungsregler eine Wegerfassungseinrichtung zum Bestimmen der Stellung des Hauptventils auf. Insbesondere bestimmt und/oder misst die Wegerfassungseinrichtung insbesondere berührungslos den Abstand zwischen einer ersten relativ zum Ventildurchgang des Hauptventils ortsfesten Referenzposition und einer zweiten Referenzposition. Die erste ortsfeste Referenzposition kann eine Sensorposition im Stellungsregler sein, der beispielsweise an einem Joch des Hauptventils oder einem Gehäuse des Hauptantriebs angebracht ist. Bei einer alternativen Ausführung kann die Wegerfassungseinrichtung in einer vom Stellungsregler separaten Gehäuseeinheit aufgenommen sein, die an einem Joch des Hauptventils, am Hauptantrieb oder einem Ventilkörper des Hauptventils ortsfest angebracht ist und mit dem Stellungsregler signalübertragungsgemäß verbunden ist. Die zweite Referenzposition ist an einem Stellkraftübertragungsglied des Hauptventils oder des Hauptantriebs, wie einer Antriebs- und/oder Ventilstange, einem Membranteller oder einem Kolben des Hauptantriebs festgelegt.

Für eine berührungslose Messung kann die erste oder zweite Referenzposition mit einem magnetfelderzeugenden Indikator versehen sein und die jeweils andere Referenzposition mit einem Hall-Sensorelement, das eine Abstandsänderung zum Indikator durch Veränderung des registrierten Magnetfelds erfasst. Alternativ oder zusätzlich zum Hall-Sensor kann die Wegerfassungseinrichtung eine Mechanik umfassen, die den Weg, den eine Referenzposition des Stellkraftübertragungsglieds zurücklegt, auf einen Wegsensor mechanisch überträgt. Dabei kann eine proportionale Wegübersetzung durch die Mechanik realisiert sein. Insbesondere koppelt die Mechanik das Stellkraftübertragungsglied mit einem insbesondere innerhalb des Stellungsreglers angeordneten Wegsensor, wie einem Potentiometer. Da die Wegerfassungseinrichtung direkt die Stellung des Hauptventils abgreift und dem Stellungsregler zur Verfügung stellt, erzeugt der Stellungsregler das pneumatische Stellsignal unabhängig von sich eventuell ändernden Betriebsbedingungen in der Bypassleitung, so dass eine hohe Regelungsgüte erreicht ist und zuverlässige Informationen über die Hauptventilstellung an eine wirkende Prozessleitwarte übermittelt werden.

Bei einer bevorzugten Ausführung weist das Hauptventil ein insbesondere fluiddichtes Gehäuse auf, das eine Zulauföffnung und eine Ablauföffnung sowie den Ventildurchgang ausbildet und in dem das Ventilglied stellbeweglich gelagert ist. Der Hauptantrieb ist bei dieser Ausführung in dem Gehäuse vollständig aufgenommen ist. Alternativ oder zusätzlich kann in dem Gehäuse die Wegerfassungseinrichtung vollständig aufgenommen sein. Insbesondere weist das Gehäuse genau eine elektrische Schnittstelle zur Übertragung von Wegerfassungsdaten an den Stellungsregler auf. Durch die Integration des Hauptantriebs und/oder der Wegerfassungseinrichtung in das Hauptventilgehäuse wird eine besonders kompakte Bauweise erreicht. Da ein integrierter Hauptantrieb keinen Umwelteinflüssen ausgesetzt ist, ist diese Ausführung im Wesentlichen wartungsfrei.

Bei einer bevorzugten Ausführung ist der Stellungsregler dazu ausgelegt, das Hilfsventil für eine Stellungsänderung des Hauptventils wahlweise als Auf-Zu-Ventil, das ausschließlich zwischen einer vollständig geöffneten und einer vollständig geschlossenen Ventilstellung bewegt wird, oder ein Regelventil anzusteuern, das beliebige Zwischenstellungen zwischen einer vollständig geöffneten und einer vollständig geschlossenen Ventilstellung einnimmt. Insbesondere ist das Hilfsventil in der Bypassleitung derart angeordnet, dass die Arbeitskammer mit dem maximalen Prozessfluiddruck im Zulauf des Hauptventils beaufschlagbar ist. Durch Ansteuerung des Hilfsventils als Auf-Zu-Ventil lässt sich eine schnelle Regelantwort des Hauptventils erreichen. Mit Hilfe der Ansteuerung als Regelventil können Prozessfluidströme am Hauptventil exakt eingestellt werden. Insbesondere wählt der Stellungsregler die Art der Ansteuerung in Abhängigkeit von einem Hauptventilstellungssignal, einem Vorgabesignal der Prozessleitwarte, einem erfassten Temperatursignal oder Prozessfluiddrucksignal und/oder aus Diagnoseinformation, die der Stellungsregler aus einem oder mehreren der vorgenannten Signale berechnet.

Bei einer bevorzugten Ausführung weist der Stellungsregler einen elektrischen Anschluss, wie einen Stromschleifenanschluss oder einen Feldbusanschluss auf, über den er ein elektrisches Sollstellsignal für das Hauptventil empfängt.

Bei einer bevorzugten Ausführungsform umfasst der Stellungsregler ein Drahtloskommunikationsmodul, wie ein Bluetoothmodul, das insbesondere Stellungs-Sollwerte, Stellungsinformation und/oder Diagnoseinformationen von einer Prozessleitwarte empfängt und/oder an diese sendet. Der Stellungsregler berechnet aus dem von der Prozessleitwarte empfangenen Stellungs-Sollwert, insbesondere unter Berücksichtigung der Regelstrecke vom pneumatischen Antrieb über den Hauptantrieb bis zum Ventilglied des Hauptventils, ein pneumatisches Stellsignal und gibt dies über einen pneumatischen Ausgang an den pneumatischen Antrieb ab.

Bei einer bevorzugten Ausführung ist der Stellungsregler mit einem Drucksensor zum Erfassen des Prozessfluiddrucks im Zulauf und/oder einem Drucksensor zum Erfassen des Prozessfluiddrucks im Ablauf des Hauptventils und/oder einem Temperatursensor zum Erfassen der Temperatur des Prozessfluids signalübertragend verbunden. Insbesondere berechnet der Stellungsregler das pneumatische Stellsignal und/oder Diagnoseinformationen in Abhängigkeit von wenigstens einem aus der Auswahl, die Prozessfluiddruck im Zulauf, Prozessfluiddruck im Ablauf und Prozessfluidtemperatur umfasst.

Bei einer bevorzugten Ausführung umfasst das Feldgerät einen Elektrizitätsgenerator, wie eine Turbine, einen elektromagnetischen Druckluftwandler oder ein Thermoelement, zum Erzeugen elektrischer Energie aus Prozessfluidströmungsenergie. Insbesondere ist der Elektrizitätsgenerator in der Bypassleitung zwischengeschaltet. Vorzugsweise versorgt der Elektrizitätsgenerator den Stellungsregler, die Wegerfassungseinrichtung, die Drucksensoren und/oder den Temperatursensor mit elektrischer Energie.

Bei einer bevorzugten Ausführung sind das Hilfsventil, die Bypassleitung oder das Drosselglied in einem gemeinsamen Gehäuse integriert. Insbesondere sind ein Ventilkörper des Hilfsventils, die Bypassleitung und das Drosselglied aus einem monolithischen Gehäuseblock gebildet. In dem Gehäuseblock sind zusätzlich das bewegliche Ventilglied des Hilfsventils und eine Mechanik zur Übertragung der Stellkraft des pneumatischen Antriebs angeordnet. Insbesondere ist das Gehäuse mit dem Hauptantrieb und/oder dem Hauptventil als fest verbundene Montageeinheit vorzugsweise frei dynamischer Dichtungen ausgeführt. Es sei klar, dass die Montageeinheit als Ganzes transportierbar ist und bei Erstinstallation am Einsatzort lediglich mit externen Anschlüssen, nämlich dem Zulaufanschluss, dem Ablaufanschluss, dem pneumatischen Antrieb des Hilfsventils und der Wegerfassungseinrichtung des Stellungsreglers verbunden werden muss.

Bei einer bevorzugten Ausführung weist der Stellungsregler ein Reglergehäuse auf, das zum Bilden einer Montageeinheit mit wenigstens dem pneumatischen Antrieb ausgelegt ist. Dazu ist an einer Außenseite des Reglergehäuses eine Anschlussstruktur zum ortsdefinierten Befestigen des Stellungsreglers an dem pneumatischen Antrieb und Abgeben eines pneumatischen Stellsignals ausgebildet. Insbesondere weist der pneumatische Antrieb eine gegengleiche, insbesondere formkomplementär zur Anschlussstruktur des Reglergehäuses ausgebildete Aufnahmestruktur auf. Vorzugsweise weist der Stellungsregler außer der Anschlussstruktur insbesondere genau eine pneumatische Schnittstelle zur Verbindung mit einer Druckluftquelle und insbesondere genau eine elektrische Schnittstelle zur Verbindung mit einer Prozessleitwarte auf.

Insbesondere kann das Feldgerät als Gesamtmontageeinheit ausgebildet sein, in der das Hauptventil, das Gehäuse, das Hilfsventil, die Bypassleitung und das Drosselglied integriert sind, sowie eine Montageeinheit aus Stellungsregler und pneumatischem Antrieb, installationsbereit miteinander derart verbunden sind, dass jeweilige Schnittstellen ortsfest relativ zueinander festgelegt sind. Bei einer alternativen Ausführung ist der Stellungsregler separat beispielsweise an einem Joch des Hauptventils angeordnet.

Eine oder mehrere Ausführungsformen der Erfindung hat den Vorteil, dass Dichtungen an Anschlussübergängen zwischen Stellungsregler und Stellantrieb sowie zwischen Hilfsventil, Bypassleitung, Hauptantrieb und Hauptventil konstruktiv einfach ausgestaltet sein können, ohne dass dynamische Belastungen berücksichtigt werden müssen. Außerdem erlaubt das erfindungsgemäße Feldgerät eine zeit- und kostensparende Installation, da lediglich eine Anbindung an externe Versorgungsanschlüsse hergestellt werden muss. Hohe elektrische Ströme oder Spannungen sind in der Nähe des Prozessfluids durch Verwendung des pneumatischen Antriebs ausgeschlossen, so dass eine ausreichend hohe Explosionssicherheit des Feldgeräts selbst bei Leckagen am Feldgerät gewährleistet ist.

Weitere Eigenschaften, Vorteile und Merkmale der Erfindung werden durch die folgende Beschreibung bevorzugter Ausführungen der Erfindung anhand der beiliegenden Zeichnungen deutlich, in denen zeigen:
- Fig. 1: eine schematische Darstellung eines ersten Ausführungsbeispiels des erfindungsgemäßen Feldgeräts;
- Fig. 2: eine schematische Darstellung eines zweiten Ausführungsbeispiels des erfindungsgemäßen Feldgeräts;
- Fig. 3: eine schematische Darstellung eines dritten Ausführungsbeispiels des erfindungsgemäßen Feldgeräts;
- Fig. 4: eine schematische Darstellung eines vierten Ausführungsbeispiels des erfindungsgemäßen Feldgeräts; und
- Fig. 5: eine schematische Darstellung eines fünften Ausführungsbeispiels des erfindungsgemäßen Feldgeräts.

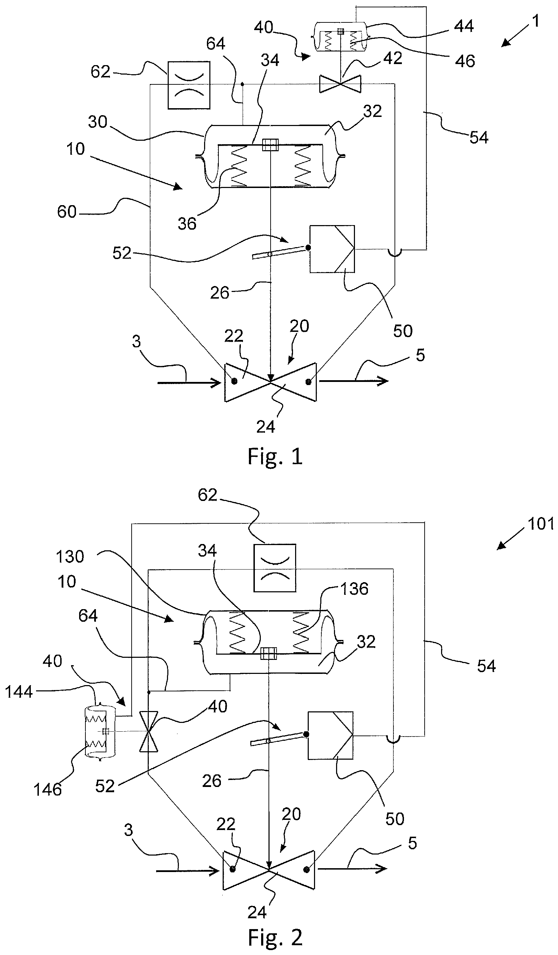

In Fig. 1 ist das erfindungsgemäße Feldgerät mit der Bezugsziffer 1 versehen. Das Feldgerät 1 umfasst ein Hauptventil 20, das in einem nicht näher dargestellten Prozessfluidleitungssystem einer nicht näher dargestellten prozesstechnischen Anlage eingesetzt ist. Das Hauptventil 20 regelt einen durch die Pfeile 3, 5 angedeuteten Prozessfluidstrom und weist einen Zulauf 22 stromaufwärts eines nicht in Fig. 1 näher dargestellten Ventildurchgangs des Hauptventils 20 und einen stromabwärts des Ventildurchgangs liegenden Ablauf 24 auf. Ein in Fig. 1 nicht näher dargestelltes Ventilglied ist stellbeweglich in einem Ventilkörper oder -gehäuse des Hauptventils 20 gelagert, um durch Veränderung des freien Ventildurchgangsquerschnitts die Prozessfluidströmung vom Zulauf zum Ablauf zu beeinflussen. Das Ventilglied ist über eine Ventil- und/oder Antriebsstange 26 mit einem Hauptantrieb 30 stellbewegungsübertragend verbunden. Der Hauptantrieb 30 weist eine Arbeitskammer 32 sowie eine Rückstellkammer 36 auf, die durch einen Membranteller 34 voneinander getrennt sind. Die Antriebs- und/oder Ventilstange 26 ist stellkraftübertragend mit dem Membranteller 34 verbunden.

Über eine Bypassleitung 60, die den Zulauf 22 des Hauptventils 20 mit dem als Prozessfluiddrucksenke wirkenden Ablauf 24 unter Überbrückung des Ventildurchgangs des Hauptventils 20 verbindet, wird Prozessfluid in die Arbeitskammer 32 des Hauptantriebs 30 eingespeist. Der maximale Zufließdruck zur Arbeitskammer wird durch ein eine Festdrossel 62 begrenzt, die zwischen dem Zulauf 22 und einer Abzweigung 64 zur Arbeitskammer 32 in der Bypassleitung 60 angeordnet ist. Die Festdrossel 62 zusammen mit dem Hilfsventil 42 dient als Druckteiler, so dass bei vollständig geöffnetem Hilfsventil der Druck in der Kammer 32 vollständig entweichen kann.

Stromabwärts der Abzweigung 64 ist ein Stellgerät 40 in der Bypassleitung 60 angeordnet. Das Hilfsstellgerät 40 umfasst ein Hilfsventil 42, mittels dem der in der Arbeitskammer 32 des Hauptstellantriebs 30 herrschende Druck einstellbar ist. Das Hilfsstellgerät 40 weist einen einfachwirkenden pneumatischen Antrieb 44 auf, der das Hilfsventil 42 entsprechend einem zugeführten pneumatischen Steuersignal öffnet oder schließt. Das Stellgerät 40 kann als Hubventil mit pneumatischem Membranantrieb ausgestaltet sein. Zur Erhöhung des Drucks in der Arbeitskammer 32 wird der Durchflussquerschnitt des Hilfsventils 42 verringert, so dass zurückgestautes Prozessfluid in die Arbeitskammer 32 strömt. Wird das Hilfsventil 42 geöffnet, bewirkt die Federkraft der Rückstellfeder 36 im Hauptantrieb 30, dass das Prozessfluid aus der Arbeitskammer 32 zum Ablauf 24 abfließt.

Das Stellgerät 40 umfasst einen Stellungsregler 50, der über eine pneumatische Leitung 54 mit dem pneumatischen Antrieb 44 des Stellgeräts 40 verbunden ist. In Abhängigkeit von der Stellung des Hauptventils 20 und einer Stellungsvorgabe erzeugt der Stellungsregler ein pneumatisches Stellungssignal für den pneumatischen Antrieb 44.

An dem Stellungsregler 50 ist eine Wegerfassungseinrichtung 52 zur Bestimmung der Stellung des Ventils 20 vorgesehen. Die Wegerfassungseinrichtung 52 steht über eine Messmechanik direkt mit der Ventil- und/oder Antriebsstange 26 des Hauptventils 20 in Eingriff, um den von der Ventil- und/oder Antriebsstange 26 zurückgelegten Weg direkt zu messen. Dazu definiert die Wegerfassungseinrichtung 52 einen ersten ortsfesten Referenzpunkt, relativ zu dem sich ein zweiter an der Ventil- und/oder Antriebsstange 26 stationärer Referenzpunkt bewegt. Die Bewegungslänge wird beispielsweise durch ein Potentiometer oder eine andere geeignete Sensorik abgegriffen und dem Stellungsregler als Wegsignal bereitgestellt.

Der Stellungsregler 50 empfängt von einer Prozessleitwarte ein elektrisches Stellungssollsignal für das Hauptventil 20 und ist an eine nicht näher dargestellte pneumatische Versorgung angeschlossen. Eine in dem Stellungsregler 50 implementierte Regelroutine berechnet in Abhängigkeit von der gemessenen Stellung und dem gemessenen Stellungssollsignals des Hauptventils 20 ein pneumatisches Steuersignal, das an den pneumatischen Antrieb 44 des Stellgeräts 40 abgegeben wird. Das pneumatische Steuersignal ist vom Stellungsregler so berechnet, dass das Hilfsventil 42 eine Stellung einnimmt, die den Prozessfluiddrucks in der Arbeitskammer 32 derart erhöht oder erniedrigt, dass die regelungsgemäße Stellbewegung am Hauptventil 20 eintritt.

Das Stellgerät 40 kann auch derart ausgelegt sein, dass der pneumatische Antrieb 44 und das Hilfsstellventil 42 als pneumatisch angetriebenes Auf-Zu-Ventil realisiert sind. Durch eine entsprechend ausgelegte Regelungsroutine im Stellungsregler 50 kann bei dieser technisch sehr unkomplizierten Lösung eine hohe Regelungsdynamik des Hauptventils erreicht werden. Der Stellungsregler 50 kann auch derart ausgelegt sein, dass er das Stellgerät 40 wahlweise in einem Regelventilbetrieb oder einem Auf-Zu-Ventilbetrieb ansteuert. Ein Umschalten zwischen Regelventilbetrieb und Auf-Zu-Ventilbetrieb kann von der Hauptventilposition, einer Vorgabe der Prozessleitwarte oder Ventil-, Prozessfluid- oder Anlagenparametern abhängen, die der Stellungsregler erfasst.

In einer nicht näher dargestellten Ausführungsform kann anstelle der Festdrossel 62 ein elektrisches oder pneumatisches Regel- oder Auf-Zu-Ventil vorgesehen sein und insbesondere durch den Stellungsregler 50 angesteuert sein. In einer weiteren nicht näher dargestellten Ausführungsform umfasst das Feldgerät einen Energiewandler, der aus Prozessfluidenergie elektrische Energie erzeugt. Der Energiewandler versorgt den Stellungsregler 50, die Wegerfassungseinrichtung 52 und gegebenenfalls ein elektrisch stellbares Drosselglied.

Das Feldgerät gemäß Fig. 1 ist derart ausgelegt, dass bei Energieausfall eine offene Sicherheitsstellung erreicht wird. Bleibt ein durch den Stellungsregler 50 zu erzeugendes pneumatisches Stellsignal für den Antrieb 44 aus, ist die Federrückstellwirkung derart ausgelegt, dass das Hilfsventil 42 mittels Federenergie vollständig geöffnet wird. Ist das Hilfsventil 42 vollständig geöffnet, weist die Bypassleitung 60 stromabwärts der Abzweigung in die Arbeitskammer 32 keinen Strömungswiderstand auf, der einen Druckaufbau in der Arbeitskammer 32 bewirken könnte. Die Rückstellfeder 36 des Hauptantriebs 30 ist derart ausgelegt, dass diese den durch das Drosselglied 62 begrenzten Einspeisedruck in die Arbeitskammer 32 überwindet und das Hauptventil 20 in eine offene Stellung verbringt.

Fig. 2 zeigt ein erfindungsgemäßen Feldgerät 101 in einer zweiten Ausführung, die in vielen Aspekten dem Ausführungsbeispiel der vorangehenden Figur entspricht, wobei gleiche Bezugszeichen für gleiche Komponenten verwendet wurden, und veränderte Komponenten um 100 erhöhte Bezugsziffern tragen.

Das Feldgerät 101 unterscheidet sich von dem Feldgerät 1 darin, dass das Stellgerät 40 stromaufwärts der Abzweigung 64 zur Arbeitskammer angeordnet ist und das Drosselglied 62 stromabwärts der Abzweigung 64. Außerdem sind die Rückstellfedern 146 des pneumatischen Antriebs 144 und die Rückstellfeder 136 des Hauptantriebs 130 derart in dem jeweiligen Antrieb angeordnet, dass das Hilfsventil 42 und das Hauptventil 20 eine geschlossene Sicherheitsstellung erreichen, sobald die Betriebsenergie ausfällt. Erhält der pneumatische Antrieb 144 vom Stellungsregler 50 kein pneumatisches Stellsignal, drängt die Rückstellfeder 146 das Hilfsventil 42 in eine geschlossene Position. Dadurch wird eine Prozessfluidspeisung der Arbeitskammer 32 des Hauptantriebs 130 unterbunden und die Rückstellfeder 136 des Hauptantriebs 130 drückt verbliebenes Prozessfluid aus der Arbeitskammer 32 in den Ablauf 24. Durch die Rückstellbewegung wird das Ventil 20 in eine geschlossene Sicherheitsstellung verbracht.

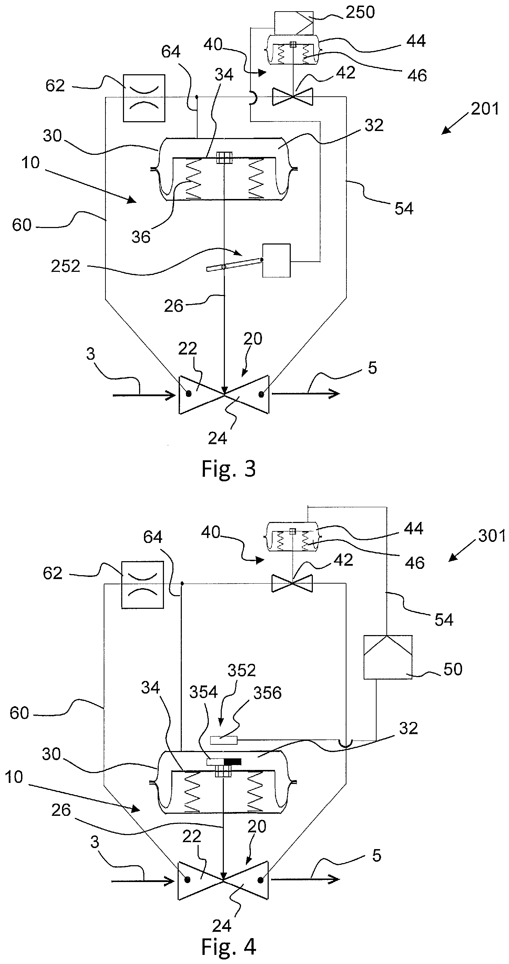

Das in Fig. 3 gezeigte Ausführungsbeispiel eines erfindungsgemäßen Feldgeräts 201 gleicht in vielen Aspekten dem Feldgerät 1 gemäß Fig. 1. Gleiche Komponenten sind daher mit den gleichen Bezugsziffern versehen. Veränderte Komponenten weisen um 200 erhöhte Bezugsziffern auf.

Das Feldgerät 201 unterscheidet sich vom Feldgerät 1 dadurch, dass der Stellungsregler 250 als Montageeinheit mit dem pneumatischen Antrieb 44 des Stellgeräts 40 ausgebildet ist. Dazu ist der Stellungsregler 250 in einem Reglergehäuse angeordnet, das unmittelbar angrenzend an dem Gehäuse des pneumatischen Antriebs 44 ortsfest angebracht ist. Vorzugsweise kontaktiert das Antriebsgehäuse das Gehäuse des Stellungsreglers. Das Reglergehäuse weist an einer nicht näher dargestellten Außenseite eine ortsfeste pneumatische Ausgangsschnittstelle auf, die mit einer ortsfesten pneumatischen Eingangsschnittstelle des pneumatischen Antriebs 44 in dichtenden Eingriff bringbar ist. Eine dynamische Dichtung an beweglichen Anschlussteilen entfällt, wodurch eine einfache und kostengünstige Konstruktion ermöglicht ist. Die Montageeinheit kann außerdem das Hilfsventil 42 umfassen, das am pneumatischen Antrieb 44 beispielsweise über ein Joch vormontiert ist. Der Positionssensor 252 ist bei dem Feldgerät 201 als externer Positionssensor ausgeführt, der mit dem Stellungsregler 250 signalübertragend verbunden ist.

Fig. 4 zeigt eine vierte Ausführung eines erfindungsgemäßen Feldgeräts 301, das in vielen Aspekten dem mit Bezug auf Fig. 1 beschriebenen Feldgerät 1 gleicht. Gleiche Komponenten sind folglich mit den gleichen Bezugsziffern versehen, wobei unterschiedliche Komponenten Bezugsziffern aufweisen, die um 300 erhöht sind.

Das Feldgerät 301 unterscheidet sich vom Feldgerät 1 im Wesentlichen darin, dass die Wegerfassungseinrichtung 350 die Ventilstellung des Hauptventils 20 kontaktlos erfasst. Dazu ist ein magnetischer Stellungsmelder 354 ortsfest an der Verbindungsstelle zwischen Antriebs- und/oder Ventilstange 26 und Membranteller 34 angeordnet. Der magnetische Stellungsindikator oder -melder 354 bewegt sich weggleich mit der Antriebs- und/oder Ventilstange 26. In einem durch das Magnetfeld des Stellungsmelders 354 beeinflussbaren Bereich angrenzend an den Hauptantrieb 30 ist ein Hall-Sensor 356 angeordnet, der eine Veränderung des vom Stellungsmelder 354 erzeugten Magnetfelds aufgrund einer Distanzänderung zwischen Hall-Sensor 356 und Stellungsmelder 354 erfasst. Der Hall-Sensor 356 ist signalübertragungsgemäß mit dem Stellungsregler 50 verbunden. Bei einer nicht näher dargestellten Ausführungsform ist die Wegerfassungseinrichtung 352 vollständig in einem Gehäuse des Hauptantrieb integriert und ausschließlich über eine elektrische Signalschnittstelle von außen zugänglich.

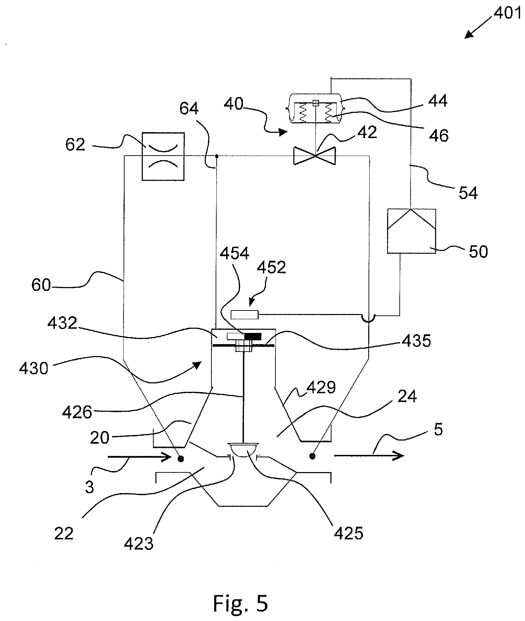

In Fig. 5 ist ein fünftes Ausführungsbeispiel eines Feldgeräts 401 dargestellt, das in vielen Aspekten dem Feldgerät 1 gemäß Fig. 1 gleicht. Gleiche Komponenten sind mit den gleichen Bezugsziffern versehen, unterschiedliche Komponenten mit Bezugsziffern, die um 400 erhöht sind.

Das Feldgerät 401 unterscheidet sich vom Feldgerät 1 durch einen Hauptantrieb 430, dessen Arbeitskammer 432 in einem Gehäuse 429 des Hauptventils 20 angeordnet ist. Erhält der pneumatische Antrieb 44 des Hilfsstellgeräts 40 vom Stellungsregler 50 ein pneumatisches Signal zum Öffnen des Hilfsventils 42, wird in der Arbeitskammer 432 kein ausreichend hoher Gegendruck aufgebaut, um zu verhindern, dass der Prozessfluiddruck im Zulauf das Ventilglied 425 den Ventildurchgang 423 öffnend abhebt. Erhält der pneumatische Antrieb 44 ein pneumatisches Stellsignal zum Schließen des Hilfsventils 42, kann in der Arbeitskammer ein Gegendruck zum Schließen des Hauptventils 20 aufgebaut werden. Das Drosselglied 62 sowie die Wirkfläche 435 des Hauptantriebs 430 sind bezüglich des Ventildurchgangs und des Ventilglieds des Hauptventils 20 derart ausgelegt, dass ein Schließen ohne Rückstellfeder erfolgt. Die Wegerfassungseinrichtung 452 ist gemäß der Wegerfassungseinrichtung 352 des in Fig. 4 gezeigten Feldgeräts 301 ausgeführt.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1, 101, 201, 301, 401: Feldgerät
- 3: Pfeil
- 5: Pfeil
- 20: Hauptventil
- 22: Zulauf
- 24: Ablauf
- 26: Antriebs- und/oder Ventilstange
- 30, 130, 430: Hauptstellantrieb
- 32, 432: Ausgleichskammer
- 34: Membranteller
- 36: Rückstellkammer
- 40: Stellgerät
- 42: Hilfsventil
- 44, 144: pneumatischer Antrieb
- 46, 146: Rückstellfeder
- 50,250: Stellungsregler
- 52, 352, 452: Wegerfassungseinrichtung
- 60: Bypass-Leitung
- 62: Festdrossel
- 64: Abzweigung
- 354: magnetischer Stellungsmelder
- 356: Hall-Sensor
- 423: Ventildurchgang
- 425: Ventilglied
- 429: Gehäuse
- 435: Wirkfläche

## Patentansprüche

1. Feldgerät (1, 101, 201, 301, 401) zum Regeln eines Prozessfluidstroms einer prozesstechnischen Anlage, umfassend:
- ein Hauptventil (20) zum Einstellen des Prozessfluidstroms, das einen Zulauf stromaufwärts eines mit einem Ventilglied (425) verschließbaren Ventildurchgangs (423) und einen Ablauf stromabwärts des Ventildurchgangs (423) aufweist,
- einen prozessfluidgespeisten Hauptantrieb (30, 130, 430) zum Stellen des Hauptventils (20), der wenigstens eine mit Prozessfluid zu beaufschlagende Arbeitskammer (32, 432) und eine Rückstelleinrichtung, wie eine Rückstellkammer und/oder einen Federspeicher (36, 136, 436), insbesondere zum Vorspannen des Ventilglieds (425) aufweist,
- eine den Zulauf (22) und den Ablauf fluidisch verbindende Bypassleitung (60), über welche die Arbeitskammer (32, 432) mit dem Prozessfluid speisbar ist, und
- ein Hilfsventil (42) zum Verändern des Prozessfluiddrucks in der Arbeitskammer (32, 432),
**gekennzeichnet durch** einen pneumatischen Antrieb (44, 144) zum Stellen des Hilfsventils und durch einen Stellungsregler (50, 250), der in Abhängigkeit von der Stellung des Hauptventils (20) ein pneumatisches Steuersignal dem pneumatischen Antrieb (44, 144) zuführt.

2. Feldgerät (1, 101, 201, 301, 401) nach Anspruch 1, **dadurch gekennzeichnet, dass** die Bypassleitung eine zwischen dem Zulauf (22) und dem Ablauf angeordnete Abzweigung (64) in die Arbeitskammer (32, 432) aufweist, wobei insbesondere ein Drosselglied, wie eine Festdrossel (62), zum Begrenzen eines Drucks des Prozessfluids in der Bypassleitung (60) stromaufwärts oder stromabwärts der Abzweigung (64) angeordnet ist und das Hilfsventil (42) entsprechend stromabwärts oder stromaufwärts der Abzweigung (64) angeordnet ist.

3. Feldgerät (1, 101, 201, 301, 401) nach einem der vorstehenden Ansprüche, **dadurch gekennzeichnet, dass** der Stellungsregler (50, 250) eine Wegerfassungseinrichtung (52, 352, 452) zum Bestimmen der Stellung des Hauptventils (20) aufweist, die insbesondere den Abstand zwischen einer ersten relativ zum Ventildurchgang (425) des Hauptventils (20) ortsfesten Referenzposition, und einer zweiten Referenzposition insbesondere berührungslos bestimmt, die an einem Stellkraftübertragungsglied, wie einer Antriebs- und/oder Ventilstange (26) oder einem Membranteller (34), des Hauptantriebs (30, 130, 430) oder des Hauptventils (20), festgelegt ist, und/oder eine Mechanik aufweist, die ein Stellkraftübertragungsglied des Hauptantriebs (30, 130, 430) oder des Hauptventils (20) mit einem insbesondere innerhalb des Stellungsreglers (50, 250) angeordneten Wegsensor, wie ein Potentiometer, koppelt.

4. Feldgerät (1, 101, 201, 301, 401) nach einem der vorstehenden Ansprüche, **dadurch gekennzeichnet, dass** das Hauptventil (20) ein insbesondere fluiddichtes Gehäuse (429) aufweist, das einen Zulaufanschluss und einen Ablaufanschluss sowie den Ventildurchgang (423) ausbildet und in dem das Ventilglied (425) stellbeweglich gelagert ist, wobei der Hauptantrieb (430) und/oder eine Wegerfassungseinrichtung (352, 452) in dem Gehäuse (429) vollständig aufgenommen ist und/oder das Gehäuse (429) insbesondere genau eine elektrische Schnittstelle zur Übertragung von Wegerfassungsdaten an den Stellungsregler (50, 250) aufweist.

5. Feldgerät (1, 101, 201, 301, 401) nach einem der vorstehenden Ansprüche , **dadurch gekennzeichnet, dass** der Stellungsregler (50, 250) dazu ausgelegt ist, für eine Stellungsänderung des Hauptventils (20) das Hilfsventils (42) wahlweise als Auf-/Zu-Ventil oder Regelventil anzusteuern, wobei insbesondere das Hilfsventil (42) in der Bypassleitung (60) derart angeordnet ist, dass die Arbeitskammer (32) mit dem gleichen Prozessfluiddruck wie im Zulauf (23) des Hauptventils (20) beaufschlagbar ist.

6. Feldgerät (1, 101, 201, 301, 401) nach einem der vorstehenden Ansprüche, **dadurch gekennzeichnet**, der Stellungsregler (50, 250) einen elektrischen Anschluss, wie einen Stromschleifenanschluss oder einen Feldbusanschluss, aufweist, über den der Stellungsregler (50, 250) ein elektrisches Sollstellsignal für das Hauptventil (20) empfängt, und/oder das der Stellungsregler (50, 250) ein Drahtlos-Kommunikationsmodul, wie ein Bluetooth-Modul, aufweist, das insbesondere Stellungssollwerte, Stellungsinformationen und/oder Diagnoseinformationen an eine Prozessleitwarte sendet und/oder von dieser empfängt.

7. Feldgerät (1, 101, 201, 301, 401) nach einem der vorstehenden Ansprüche, **dadurch gekennzeichnet, dass** der Stellungsregler (50, 250) mit einem Drucksensor zum Erfassen des Prozessfluiddrucks im Zulauf und/oder einem Drucksensor zum Erfassen des Prozessfluiddrucks im Ablauf des Hauptventils (20) und/oder einem Temperatursensor zum Erfassen einer Temperatur des Prozessfluids verbunden ist, wobei insbesondere der Stellungsregler (50, 250) in Abhängigkeit von dem Prozessfluiddruck im Zulauf und/oder Ablauf und/oder der Prozessfluidtemperatur das pneumatische Stellsignal erzeugt und/oder Diagnoseinformation berechnet.

8. Feldgerät (1, 101, 201, 301, 401) nach einem der vorstehenden Ansprüche, **dadurch gekennzeichnet, dass** ein Elektrizitätsgenerator, wie eine Turbine, ein elektromagnetischer Druckluftwandler oder ein Thermoelement, zum Erzeugen elektrischer Energie aus Prozessfluidströmungsenergie vorgesehen ist, der vorzugsweise sämtliche elektrischen Bauteile insbesondere des Stellungsreglers (50, 250) und/oder die Wegerfassungseinrichtung (52, 352, 452) mit elektrischer Energie versorgt.

9. Feldgerät (1, 101, 201, 301, 401) nach einem der vorstehenden Ansprüche, **dadurch gekennzeichnet, dass** das Hilfsventil (42), der pneumatische Antrieb (44) die Bypassleitung (60) und/oder ein Drosselglied (62) in einem gemeinsamen Gehäuse integriert sind, wobei insbesondere ein Ventilkörper des Hilfsventils (42), die Bypassleitung und das Drosselglied aus einem monolithischen Gehäuseblock gebildet sind und/oder das Gehäuse mit dem Hauptantrieb (30, 130, 430) und/oder dem Hauptventil (20) als fest verbundene Montageeinheit vorzugsweise frei dynamischer Dichtungen ausgeführt ist.

10. Feldgerät (1, 101, 201, 301, 401) nach einem der vorstehenden Ansprüche, **dadurch gekennzeichnet, dass** der Stellungsregler (250) zum Bilden einer Montageeinheit mit wenigstens dem pneumatischen Antrieb (44) ein Reglergehäuse aufweist, das an einer Außenseite eine Anschlussstruktur zum ortsdefinierten Befestigen an dem pneumatischen Antrieb (44) und Übermitteln eines pneumatischen Stellsignals formt, wobei insbesondere der pneumatische Antrieb (44) eine gegengleich ausgebildete Aufnahmestruktur aufweist und/oder der Stellungsregler (250) außer der Anschlussstruktur insbesondere genau eine pneumatische Schnittstelle zur Verbindung mit einer Druckluftquelle und insbesondere genau eine elektrische Schnittstelle zur Verbindung mit einer Prozessleitwarte aufweist.

11. Verfahren zum Regeln eines Prozessfluidstroms einer prozesstechnischen Anlage mit Hilfe eines Feldgeräts nach einem der Ansprüche 1 bis 10 bei dem:
- ein Hauptventil von einem prozessfluidgespeisten Hauptantrieb gestellt wird, indem dessen Arbeitskammer mit Prozessfluid beaufschlagt wird;
- ein zusätzlicher pneumatischer Antrieb zum Stellen eines Hilfsventils vorgesehen wird, der die Prozessfluidströmung in die Arbeitskammer einstellt;
- eine Stellung des durch den pneumatischen Antrieb zu stellenden Hilfsventils derart eingestellt wird, dass dem pneumatischen Antrieb ein pneumatisches Steuersignal zugeführt wird, das in Abhängigkeit von der Stellung des Hauptventils geregelt wird.

12. Verfahren nach Anspruch 11, das gemäß der Funktion des nach einem der vorstehenden Ansprüche 1 bis 10 ausgebildeten Feldgeräts verfährt.

## Claims

1. Field device (1, 101, 201, 301, 401) for controlling a process fluid stream of a processing plant, comprising:
- a primary valve (20) for adjusting the process fluid flow, including an inlet upstream of a valve passage (423), the valve passage (423) being closeable by a valve member (425), and an outlet downstream of said valve passage (423),
- a main actuator (30, 130, 430) for controlling the primary valve (20), the main actuator (30, 130, 430) being fed with process fluid, the main actuator (30, 130, 430) including at least one working chamber (32, 432) to be subjected with process fluid, and a return device, such as a return chamber and/or a spring storage (36, 136, 436), in particular for biasing the valve member (425),
- a bypass line (60) fluidally connecting the inlet (22) and the outlet, via which the process fluid can be fed to the working chamber (32, 432); and
- a secondary valve (42) for changing the process fluid pressure in the working chamber (32, 432),
**characterized by** a pneumatic actuator (44, 144) for controlling the secondary valve and by a position controller (50, 250), which supplies a pneumatic control signal dependent on the position of the primary valve (20) to the pneumatic actuator (44, 144).

2. The field device (1, 101, 201, 301, 401) according to claim 1, **characterized in that** the bypass line includes a junction (64) to the working chamber, the junction being arranged between the inlet (22) and the outlet, wherein in particular a restriction member, such as a fixed restriction (62), for limiting a pressure of the process fluid is arranged in the bypass line (60) upstream or downstream of the junction (64), and the secondary valve (42) is arranged correspondingly downstream or upstream of said junction (64).

3. The field device (1, 101, 201, 301, 401) according to one of the preceding claims, **characterized in that** the position controller (50, 250) includes a position detection device (52, 352, 452) for determining the position of the primary valve (20), which in particular determines, in particular contact-free, the distance between a first reference position stationary relative to the valve passage (425) of the primary valve (20) and a second reference position defined on an positioning-force-transmitting-member, such as an actuation rod and/or valve rod (26) or on a membrane plate (34), of the main actuator (30, 130, 430) or of the primary valve (20) and/or which comprises a mechanism which couples a positioning-force-transmitting-member of the main actuator (30, 130, 430) or of the primary valve (20) to a position sensor, such as a potentiometer, in particular arranged within the position controller (50, 250).

4. The field device (1, 101, 201, 301, 401) according to one of the preceding claims, **characterized in that** the primary valve (20) includes an in particular fluid tight housing (429) that forms an inlet connection and an outlet connection as well as the valve passage (423) and in which the valve member (425) is adjustment-moveably mounted, wherein the main actuator (430) and/or a position detection device (352, 452) is enclosed completely within the housing and/or the housing (429) includes preferably exactly one electrical interface for transmission of position detection dates to the position controller (50, 250).

5. The field device (1, 101, 201, 301, 401) according to one of the preceding claims, **characterized in that** the position controller (50, 250) is configured for selectively controlling the secondary valve (42) as an open/close-valve or as a control-valve for a position change of the main valve (20), wherein in particular the secondary valve (42) is arranged in the bypass line (60) such that the working chamber (32) is subjectable to the same process fluid pressure as present in the inlet (23) of the primary valve (20).

6. The field device (1, 101, 201, 301, 401) according to one of the preceding claims, **characterized in that** the position controller (50, 250) includes an electric connection, such as a current loop connection or a fieldbus connection, via which the position controller (50, 250) receives an electrical desired-positioning signal for the primary valve (20), and/or **in that** the position controller (50, 250) includes a wireless communication module, such as a Bluetooth-module, which in particular sends to and/or receives from a process monitoring system desired position values, position-information and/or diagnosis information.

7. The field device (1, 101, 201, 301, 401) according to one of the preceding claims, **characterized in that** the position controller (50, 250) is connected to a pressure sensor for detecting the process fluid pressure in the inlet and/or to a pressure sensor for detecting the process fluid pressure in the outlet of the primary valve (20) and/or to a temperature sensor for detecting a temperature of the process fluid, wherein in particular the position controller (50, 250) creates the pneumatic control signal and/or calculates diagnostic information dependent upon the process fluid pressure in the inlet and/or in the outlet and/or the process fluid temperature.

8. The field device (1, 101, 201, 301, 401) according to one of the preceding claims, **characterized in that** an electricity generator, such as a turbine, an electro magnetic pressure converter or a thermocouple, for producing electrical energy from process fluid stream energy is provided, which supplies preferably all electrical elements in particular of the position controller (50, 250) and/or the position detection device (52, 352, 452) with electrical energy.

9. The field device (1, 101, 201, 301, 401) according to one of the preceding claims, **characterized in that** the secondary valve (42), the pneumatic actuator (44), the bypass line (60) and/or a reduction member (62) are integrated in a common housing, wherein in particular a valve body of the secondary valve (42), the bypass line and the reduction member are made from one monolithic housing block and/or **in that** the housing is configured with the main actuator (30, 130, 430) and/or the primary valve (20) as a firmly connected assembly unit preferably free of dynamic seals.

10. The field device (1, 101, 201, 301, 401) according to one of the preceding claims, **characterized in that** the position controller (50, 250) includes a controller housing for creating an assembly unit with at least the pneumatic actuator (44), which controller housing forms on an outside a connection structure for stationary fastening to the pneumatic actuator (44) and for transmitting a pneumatic control signal, wherein in particular the pneumatic actuator (44) includes a mirror-inverted configured receiving structure and/or wherein the position controller (250), besides the connection structure, includes in particular exactly one pneumatic interface for connecting to a pressure source and in particular exactly one electrical interface for connecting to a process monitoring system.

11. A method for controlling a process fluid stream of a processing plant with the aid of a field device according to one of the proceeding claims, in which:
- a primary valve is controlled by a process fluid fed main actuator by subjecting its working chamber with process fluid;
- a further pneumatic actuator for adjusting a secondary valve is provided, which adjusts the process fluid stream into the working chamber;
- a position of the secondary valve is be positioned by the pneumatic actuator is adjusted such that the pneumatic actuator is supplied with a pneumatic control signal which is controlled dependent upon the position of the primary valve.

12. The method of claim 11 which works according to the function of a field device formed according to one of the preceding claims 1 to 10.

## Revendications

1. Appareil de terrain (1, 101, 201, 301, 401) destiné à régler un flux fluidique de processus d'une installation de process, comprenant :
- une soupape principale (20) destinée à régler le flux fluidique de processus, qui comporte une arrivée en amont d'un passage de soupape (423) susceptible d'être fermé avec un élément de soupape (425) et un écoulement en aval du passage de soupape (423),
- un entraînement principal (30, 130, 430), alimenté en fluide de processus, destiné à régler la soupape principale (20), qui comporte au moins une chambre de travail (32, 432) qui doit être soumise à du fluide de processus et un système de rappel, tel qu'une chambre de rappel et/ou un accumulateur à ressort (36, 136, 436), notamment pour précontraindre l'élément de soupape (425),
- un conduit de dérivation (60) reliant par fluide l'arrivée (22) et l'écoulement, par l'intermédiaire duquel la chambre de travail (32, 432) peut être alimentée en fluide de processus,
- une soupape auxiliaire (42) destinée à modifier la pression du fluide de processus dans la chambre de travail (32, 432),
**caractérisé par** un entraînement pneumatique (44, 144) pour le réglage de la soupape auxiliaire et par un positionneur (50, 250), qui en fonction de la position de la soupape principale (20) amène un signal de commande pneumatique vers l'entraînement pneumatique (44, 144).

2. Appareil de terrain (1, 101, 201, 301, 401) selon la revendication 1, **caractérisé en ce que** le conduit de dérivation comporte une ramification (64) dans la chambre de travail (32, 432) placée entre l'arrivée (22) et l'écoulement, notamment un organe d'étranglement, comme un restricteur fixe (62) pour limiter une pression du fluide de processus étant placé dans le conduit de dérivation (60), en amont ou en aval de la ramification (64) et la soupape auxiliaire (42) étant placée en conséquence en aval ou en amont de la ramification (64).

3. Appareil de terrain (1, 101, 201, 301, 401) selon l'une quelconque des revendications précédentes, **caractérisé en ce que** le positionneur (50, 250) comporte un système capteur de déplacement (52, 352, 452) pour déterminer la position de la soupape principale (20) qui détermine notamment sans contact, notamment l'écart entre une première position de référence stationnaire par rapport au passage de soupape (425) de la soupape principale (20) et une deuxième position de référence, qui est immobilisé sur un organe de transmission de la force de réglage, comme une tringle d'entraînement et/ou tige de soupape (26) ou une assiette de membrane (34) de l'entraînement principal (30, 130, 430) ou de la soupape principale (20), et/ou un mécanisme qui accouple un organe de transmission de la force de réglage de l'entraînement principal (30, 130, 430) ou de la soupape principale (20) avec un capteur de déplacement, comme un potentiomètre, placé notamment à l'intérieur du positionneur (50, 250).

4. Appareil de terrain (1, 101, 201, 301, 401) selon l'une quelconque des revendications précédentes, **caractérisé en ce que** la soupape principale (20) comporte un corps (429) notamment étanche au fluide, qui forme un raccord d'arrivée et un raccord d'écoulement, ainsi que le passage de soupape (423) et dans lequel l'élément de soupape (425) est logé en étant mobile en réglage, l'entraînement principal (430) et/ou un système capteur de déplacement (352, 452) étant entièrement logé dans le corps (429) et/ou le corps (429) comportant notamment précisément une interface électrique pour la transmission de données du capteur de déplacement au positionneur (50, 250).

5. Appareil de terrain (1, 101, 201, 301, 401) selon l'une quelconque des revendications précédentes, **caractérisé en ce que** le positionneur (50, 250) est conçu pour amorcer la soupape auxiliaire (42) au choix en tant que soupape d'ouverture et de fermeture ou en tant que soupape de réglage pour un changement de position de la soupape principale (20), notamment la soupape auxiliaire (42) étant placée dans le conduit de dérivation (60) de telle sorte que la chambre de travail (32) puisse être soumise à la même pression de fluide de processus que dans l'arrivée (23) de la soupape principale (20).

6. Appareil de terrain (1, 101, 201, 301, 401) selon l'une quelconque des revendications précédentes, **caractérisé en ce que** le positionneur (50, 250) comporte un branchement électrique, comme un branchement sur une boucle de courant ou un branchement sur un bus de champ, par l'intermédiaire duquel le positionneur (50, 250) réceptionne un signal de réglage de consigne pour la soupape principale (20) et/ou **en ce que** le positionneur (50, 250) comporte un module de communication sans fil, comme un module Bluetooth qui envoie notamment des valeurs de consignes de réglage, des informations de réglage et/ou des informations de diagnostic à un poste de supervision du processus et/ou les réceptionne de la part de ce dernier.

7. Appareil de terrain (1, 101, 201, 301, 401) selon l'une quelconque des revendications précédentes, **caractérisé en ce que** le positionneur (50, 250) est relié avec un capteur de pression destiné à détecter la pression du fluide de processus dans l'arrivée et/ou avec un capteur de pression destiné à détecter la pression du fluide de processus dans l'écoulement de la soupape principale (20) et/ou avec un capteur de température destiné à détecter une température du fluide de processus, notamment le positionneur (50, 250) générant le signal de réglage pneumatique et/ou calculant des informations de diagnostic, en fonction de la pression du fluide de processus dans l'arrivée et/ou dans l'écoulement et/ou de la température du fluide de processus.

8. Appareil de terrain (1, 101, 201, 301, 401) selon l'une quelconque des revendications précédentes, **caractérisé en ce qu'**il est prévu un générateur de courant électrique, comme une turbine, un échangeur pneumatique électromagnétique ou un couple thermoélectrique pour générer de l'énergie électrique à partir d'énergie hydrodynamique du fluide de processus qui alimente en énergie électrique de préférence tous les composants électriques, notamment du positionneur (50, 250) et/ou le système capteur de déplacement (52, 352, 452).

9. Appareil de terrain (1, 101, 201, 301, 401) selon l'une quelconque des revendications précédentes, **caractérisé en ce que** la soupape auxiliaire (42), l'entraînement pneumatique (44), le conduit de dérivation (60) et/ou un organe d'étranglement (62) sont intégrés dans un boîtier commun, notamment un corps de soupape de la soupape auxiliaire (42), le conduit de dérivation et l'organe d'étranglement étant formés en un bloc monolithique formant boîtier et/ou le boîtier avec l'entraînement principal (30, 130, 430) et/ou la soupape principale (20) étant réalisé sous la forme d'une unité de montage solidement assemblée, de préférence exempte de joints dynamiques.

10. Appareil de terrain (1, 101, 201, 301, 401) selon l'une quelconque des revendications précédentes, **caractérisé en ce que** pour former une unité de montage, le positionneur (250) comporte un boîtier de réglage commun avec au moins l'entraînement pneumatique (44), qui sur une face extérieure forme une structure de raccordement pour la fixation en un endroit défini sur l'entraînement pneumatique (44) et pour la transmission d'un signal de réglage pneumatique, notamment l'entraînement pneumatique (44) comporte une structure de logement conçue de manière diamétralement opposée et/ou, à part la structure de raccordement, le positionneur (250) comporte notamment précisément une interface pneumatique destinée à être connectée sur une source d'air comprimé et notamment précisément une interface électrique destinée à être connectée sur un poste de supervision du processus.

11. Procédé destiné à régler un flux fluidique de processus d'une installation de process à l'aide d'un appareil de terrain selon l'une quelconque des revendications 1 à 10, lors duquel :
- une soupape principale est réglée par un entraînement principal alimenté en fluide de processus, en ce que sa chambre de travail est soumise à du fluide de processus ;
- il est prévu un entraînement pneumatique supplémentaire pour régler une soupape auxiliaire qui règle l'écoulement du fluide de processus dans la chambre de travail ;
- une position de la soupape auxiliaire devant être réglée par l'entraînement pneumatique est réglée de telle sorte qu'à l'entraînement pneumatique soit amené un signal de commande pneumatique qui est réglé en fonction de la position de la soupape principale.

12. Procédé selon la revendication 11 qui opère selon la fonction d'un appareil de terrain conçu selon l'une quelconque des revendications 1 à 10.
